# EUROPÄISCHE PATENTSCHRIFT

(11) **EP 1 632 131 B1**
(45) Veröffentlichungstag und Bekanntmachung des Hinweises auf die Patenterteilung: **13.02.2008**
(21) Anmeldenummer: 05014929.3
(22) Anmeldetag: 09.07.2005
(51) Int. Cl.: A01F 29/10

(54) **Antrieb einer Zuführvorrichtung für landwirtschaftliche Arbeitsmaschinen**
Drive system of a feed device for an agricultural machine
Système d'entraînement d'un dispositif d'alimentation pour une machine agricole

(30) Priorität: 30.08.2004 DE 102004042113
(43) Veröffentlichungstag der Anmeldung: 08.03.2006
(73) Patentinhaber: CLAAS Selbstfahrende Erntemaschinen GmbH, 33428 Harsewinkel (DE)
(72) Erfinder: Fögeling, Walter, 33442 Herzebrock (DE); Dykstra, Martin,, 06917 Jessen/OT Grabo (DE); Isfort, Heinrich, 48249 Dülmen (DE); Gersmann, Manfred, 48231 Warendorf (DE)

(56) Entgegenhaltungen:
- EP-A- 0 818 643
- EP-A- 1 360 891
- GB-A- 2 109 213
- US-A- 6 052 978

## Beschreibung

Die vorliegende Erfindung bezieht sich auf selbstfahrende Landmaschinen, die zur Aufnahme der Ernte und zur Verarbeitung des Gutes, beispielsweise Gras oder Mais, das als Viehfutter verwendet wird, eingesetzt werden. Insbesondere auf die Zuführvorrichtung zur Zuführung von Erntematerial zur Erntegut-Verarbeitungseinrichtungen einer Landmaschine, mit wenigstens einer rotierenden antreibbaren Einzugs- und Vorpresswalze und einem mechanischen Getriebe kommen hohe Anforderungen zu. Der Antrieb für die Zuführvorrichtung ist nicht nur für die Vorpressung des Erntegutes verantwortlich, sondern auch für die Häckselqualität die durch die Umfangsgeschwindigkeit der Zuführungswalzen beeinflusst wird. Die Häckselqualität wird durch die Variation der Schnittlänge des Erntegutes bestimmt. Bei selbstfahrenden Landmaschinen sind,daher die Getriebe für die Zuführvorrichtung auch zur Einstellung der Schnittlänge des Erntegutes vorgesehen.

Derartige selbstfahrende landwirtschaftliche Erntemaschinen mit mechanisch angetriebenen Zuführvorrichtungen sind allgemein aus dem Stand der Technik, wie z.B. von Feldhäckslern her, bekannt.

Die Zuführvorrichtung besteht in der Regel aus einem Vorsatzgerät, sowie aus oberen und unteren Zuführwalzen. Die Zuführwalzen können aus Einzugs- und Vorpresswalzen, die auf verschiedene Weise angetrieben werden, bestehen. Als Antriebseinheit für die Zuführwalzen stehen beispielsweise Riementrieb, Elektromotor oder Hydraulikmotor zur Verfügung. Zwischen der Antriebseinheit und der Zuführvorrichtung befinden sich z.B. einfache Schaltgetriebe, hydrostatische Getriebe oder leistungsverzweigte Getriebe. Bekannt sind auch mehrere Stufen enthaltende Getriebe, sowie stufenlose hydraulische Getriebe.

Einfache Schaltgetriebe haben einen hohen Wirkungsgrad. Die Nachteile einfacher Schaltgetriebe bestehen aber darin, dass diese nicht von der Fahrerkabine des Feldhäckslers heraus und nicht unter Last, also während des Erntebetriebes, geschaltet werden können. Nachteilig ist hier zudem, dass die Veränderung der Einstellung der Drehzahl für die Einzugs- und Vorpresswalzen am Schnittlängengetriebe in der Regel nur im Stillstand des Feldhäckslers erfolgen kann und ein Reversierbetrieb nur durch einen zusätzlichen, meist hydrostatischen Antrieb am Schaltgetriebe möglich ist.

Hydrostatische Antriebe für Zuführvorrichtungen hingegen können aus der Fahrerkabine heraus verstellt werden. Diese sind aber gegenüber einfacher Schaltgetriebe groß dimensioniert, besitzen einen schlechten Wirkungsgrad und verursachen hohe Anschaffungskosten. Ein derartiger Antrieb für eine Zuführvorrichtung ist in der WO 01/65919 A1 offenbart. Weiter nachteilig wirkt sich hier aus, das zwei Getriebe für die oberen und unteren Zuführwalzen vorhanden sind, die durch den Hydraulikmotor angetrieben werden und dadurch bedingt hohe Kosten verursachen.

Weitergehende Entwicklungen bei dem Antrieb für die Zuführvorrichtung ergeben sich aus der EP 1 360 891 A1. Die Einstellung der Schnittlänge des Erntegutes in der Zuführvorrichtung erfolgt über einen Einzugswalzenantrieb. Der Einzugswalzenantrieb besteht aus einem Elektro- oder Hydraulikmotor, um das Getriebe, welches aus einem Planetengetriebe besteht, zusätzlich zum mechanischen anzutreiben. Die Drehzahl der Einzugs- und Vorpresswalzen wird hierbei mittels des Elektro- oder Hydraulikmotors stufenlos variiert. Zur Variation der Drehzahl der Abtriebswelle des Planetengetriebes steht für den Elektro- oder Hydraulikmotor eine Steuereinrichtung zur Verfügung.. Die Steuereinrichtung wertet selbständig, aufgrund von Sensortechnik, deren gemessene Werte aus und vergleicht diese mit hinterlegten Parametern, womit die Motoren zur Anpassung der Drehzahl der Einzugs- und Vorpresswalzen gesteuert werden. Nachteilig wirken sich bei dieser Antriebseinheit die hohen Kosten und im Verhältnis dazu der geringe Wirkungsgrad aus. Ein weiterer Nachteil ist die Regelhäufigkeit des Steuersystems und damit die ständig wechselnde Schnittlänge des Erntegutes und dadurch bedingt eine ständige wechselnde Motorbelastung des Antriebes.

Der Erfindung liegt daher zur Kostenreduzierung des Erntebetriebes das Problem zugrunde, einerseits die Stillstandszeiten einer selbstfahrenden Landmaschine zu reduzieren und andererseits das Bedienpersonal zu entlasten. Des weitern ist es notwendig, um eine optimale Häckselqualität zu erzielen, die Schnittlänge des Erntegutes entsprechend den aktuellen Erntebedingungen schnell und problemlos anzupassen, wobei ein Halten der selbstfahrende Landmaschine zu vermeiden ist.

Es ist daher Aufgabe der Erfindung eine technische Lösung für die Steuerung der Schnittlänge von Erntegut für die Zuführvorrichtung während des Fahrbetriebes von der Fahrerkabine aus anzugeben, bei denen die bekannten Nachteile von einfachen Schaltgetrieben und/oder teueren stufenlosen Antrieben mit geringen Wirkungsgrad beseitigt werden.

Erfindungsgemäß wird die Aufgabe durch die kennzeichnenden Merkmale des Patentanspruchs 1 gelöst. Vorteilhafte Ausgestaltungen und Weiterbildungen der Erfindung ergeben sich aus den nachfolgenden Unteransprüchen und der Beschreibung.

Um ein mit den Merkmalen der vorliegenden Erfindung einsetzbare Antriebsform für die Zuführvorrichtung bei selbstfahrenden Landmaschinen, nachstehend als Feldhäcksler bezeichnet, zu schaffen, wird erfindungsgemäß vorgeschlagen, ein in mehreren Gängen betreibbares Lastschaltgetriebe einzusetzen. Dies hat insbesondere den Vorteil, dass die Schnittlängen des Erntegutes während des laufenden Betriebes verändert werden können, ohne dass hierfür der Feldhäckslerbetrieb unterbrochen werden muss.

Lastschaltgetriebe können zur Erreichung einer hohen Schaltflexibilität als Mehrfachkupplungsgetriebe ausgebildet sein. Mehrfachkupplungsgetriebe sind prinzipiell als Parallelschaltung mehrerer autarker Teilgetriebe zu verstehen. Jedes dieser Teilgetriebe ist mit einer Kupplung ausgerüstet. Wird ein Mehrfachkupplungsgetriebe mit zwei Kupplungen betrieben, spricht man von einem Doppelkupplungsgetriebe.

Vorteilhafterweise wird nachstehend von einem Doppelkupplungsgetriebe ausgegangen, welches ein sequentielles Getriebe mit zwei angeordneten Hauptwellen ist. Jede Kupplung betreibt eine Hauptwelle, wobei der einen Hauptwelle die ungeraden Gänge eins, drei, fünf und der anderen Hauptwelle die geraden Gänge zwei, vier und sechs zugeordnet sind. Das Doppelkupplungsgetriebe ist somit in sechs Gängen schaltbar. Denkbar sind auch Doppelkupplungsgetriebe mit acht oder zehn Gängen. Das Doppelkupplungsgetriebe ist auch zum Rückwärtsbetrieb (Reversiervorgang) geeignet, dazu ist die Hauptwelle mit den ungeraden Gängen mit einem Rückwärtsgang ausgestattet. Der Rückwärtsgang kann auch der zweiten Hauptwelle, mit den geraden Gängen, zugeordnet sein. Durch den im Doppelkupplungsgetriebe integrierten Rückwärtsgang entfällt das, bei den im Stand der Technik bekannten Schaltgetrieben, zusätzliche hydrostatische Antriebsteil. Des weiteren entfällt aufgrund der im Doppelkupplungsgetriebe integrierten beiden Kupplungen, die für das bisherige Schaltgetriebe zuständige Riemenkupplung, die über eine Niederdruckhydraulik gesteuert wurde. Der Kraftschluss zwischen dem Antrieb und dem Doppelkupplungsgetriebe kann durch die neutrale Stellung der Kupplungen unterbrochen werden. Das Doppelkupplungsgetriebe befindet sich dann im Leerlauf.

Der kraftschlüssige Antrieb der beiden Kupplungen des Doppelkupplungsgetriebe erfolgt über eine Vorgelegewelle, die über einen Riementrieb mit der Häckseltrommel in Wirkverbindung steht. Eine andere Antriebsform der Vorgelegewelle ist auch denkbar. Die Häckseltrommel treibt somit beide Kupplungen an, wobei der Kraftschluss im gewählten Gang auf dessen Hauptwelle über die zugehörige Kupplung erfolgt. In dem lastfreien Zweig der anderen Hauptwelle kann eine neue Übersetzungsstufe, d.h. der nächste Gang ausgewählt und mittels der Doppelkupplung geschaltet werden. Die bislang geschlossene Kupplung wird geöffnet, während die andere Kupplung den Kraftschluss übernimmt.

Das Doppelkupplungsgetriebe ist somit permanent im Einsatz, d.h. mit dem Schaltvorgang ist eine Drehzahländerung der Einzugs- und Vorpresswalzen auch während des Erntebetriebes möglich, ohne das ein Stillstand der Zuführungswalzen oder ein Stillstand des Feldhäckslers erforderlich wäre, und zwar auch dann, wenn sich in der Zuführvorrichtung Erntegut befindet. Die Veränderung der Einstellung der Drehzahl für die Einzugs- und Vorpresswalzen am Schnittlängengetriebe erfolgt bei dieser erfindungsgemäßen Ausführungsform des Schaltgetriebes beim Gangwechsel ohne Kraftunterbrechung.

In vorteilhafter Weiterbildung der Erfindung können die Schaltstufen bzw. die Untersetzungsstufen des Doppelkupplungsgetriebes so ausgelegt sein, dass die abgegebenen Drehzahlen an die Einzugs- und Vorpresswalzen einen optimalen Gutfluss des Erntegutes im Einzugsbereich der Zuführvorrichtung gewährleisten. Einer Schaltstufe des Doppelkupplungsgetriebes kommt somit eine definierte Einstellung der Schnittlänge für Erntegut zu, wobei das Erntegut aus Mais oder Gras bestehen kann.

Das Doppelkupplungsgetriebe sorgt somit für einen gleichmäßigen, sicheren Einzug des Erntegutes, welches eine wesentliche Voraussetzung für einen hohen Durchsatz ist. Eine feste Pressung des Erntegutes vor der Messertrommel ist für den exakten Schnitt unerlässlich und die Drehzahl der Einzugs- und Vorpresswalzen für die Schnittlänge des Erntegutes. Das Erntegut soll im Einzugsbereich unter Volllast variiert werden, um das zu häckselnde Erntegut in unterschiedlicher Geschwindigkeit der Häckseltrommel zur Verfügung zu stellen, da die Häckseltrommel in der Regel mit konstanter Drehzahl umläuft. Dieses ist notwendig weil es sich bei dem Erntegut um unterschiedliche Rohstoffe wie Mais oder Gras handelt, das wiederum unterschiedliche Feuchtgrade besitzen kann. Um trotzdem ein optimales Häckselgut bei unterschiedlichen Erntbedingungen zu erhalten, ist die Veränderung der Schnittlänge und somit die Veränderung der Drehzahl notwendig. Je trockener das Erntegut ist, desto kürzer wird die Schnittlänge eingestellt, um ein optimales Häckselgut zu erhalten.

Um die Anzahl der Schaltstufen zu erhöhen bzw. um noch mehr Variationen der Schnittlängen für das Erntegut zur Verfügung zu stellen, kann das Doppelkupplungsgetriebe mit einem Vorschaltgetriebe kombiniert werden. Je nachdem wie viel Schaltstufen das Vorschaltgetriebe besitzt, erhöht sich die Anzahl der Schaltmöglichkeiten und somit die Anzahl der definierten Einstellungen der Schnittlängen für das Erntegut. Vorteilhafterweise besitzt das Vorschaltgetriebe zwei unterschiedliche Stufen. Die beiden Stufen ermöglichen eine Schnittlängenvorwahl für das zu erntende Gut Mais oder Gras. Mit der Wahl einer ersten Stufe wird der verfügbare Schnittlängenbereich von Mais eingestellt. Mittels einer weiteren Stufe ist der verfügbare Schnittlängenbereich von Gras wählbar. Beispielsweise kann in der Stufe "Eins" für Mais die theoretische Schnittlänge im Bereich von 4 mm bis 17 mm ausgewählt werden. In Stufe "Zwei" für Gras steht die theoretische Schnittlänge im Bereich von 13 mm bis 22 mm zur Wahl. Sind längere Schnittlängen gewünscht, wird die Messertrommel nur mit der Hälfte der Messer bestückt, insbesondere bei Gras, woraus sich z.B. in Stufe "Zwei" ein theoretischer Schnittlängenbereich von 26 mm bis 44 mm ergibt. Insgesamt stehen für die Einstellung des Häckselgutes zwölf bzw. vierundzwanzig verschiedene Schnittlängen zur Verfügung, die das Spektrum der benötigten Schnittlängen bei unterschiedlichen Erntebedingungen abdecken.

Die Schnittlänge des Erntgutes hat starken Einfluss auf den Durchsatz des Gutflusses beim Feldhäcksler. Die Schnitteinstellung beeinflusst somit die Wirtschaftlichkeit des Antriebsmotors der Maschine. Der Antriebsmotor ist in der Regel ein Verbrennungsmotor und Energielieferant für die verschiedenen Antriebsaggregate am Feldhäcksler zuständig. Der Leistungsbedarf der einzelnen Antriebsaggregate ist nicht konstant, sondern z.B. von den Erntebedingungen abhängig. Das Doppelkupplungsgetriebe wird z.B. auf die verschiedenen Erntebedingungen durch Veränderung der Schnittlänge des Erntgutes eingestellt. Die wechselnde Einstellung der Schnittlänge des Erntegutes am Doppelkupplungsgetriebe hat eine wechselnde Motorbelastung des Antriebsmotors zur Folge. Um die Drehzahl des Antriebsmotor aber im optimalen Drehmomentbereich zu halten, wird erfindungsgemäß vorgeschlagen eine elektronische Regelung vorzusehen, die die Schnittlängeneinstellung am Doppelkupplungsgetriebe erfasst und einem Wert zuordnet, der dem durchsatzabhängigen Leistungsbedarf proportional ist. Dieser Wert wird mit dem erfassten Wert der Antriebsleistung des hydrostatischen Fahrantriebs verglichen. Ändert sich der Wert der Durchsatzleistung, wird der Wert der Fahrleistung verändert. Diese Veränderung bewirkt eine Veränderung der Fahrgeschwindigkeit des Feldhäckslers. Eine kurze Schnittlänge des Erntegutes mit geringem Durchsatz kann eine geringe Fahrgeschwindigkeit zur Folge haben. Eine Vergrößerung der Schnittlänge hingegen hat einen größeren Durchsatz und kann eine höhere Fahrgeschwindigkeit zur Folge haben. Jeder Änderung der Schaltstufe bzw. der Schnittlänge kann daher eine Änderung der Fahrgeschwindigkeit zugeordnet werden. Die Belastung des Antriebsmotors kann mit dieser elektronischen Regelung relativ konstant gehalten werden, da die benötigte Leistung für die Zuführvorrichtung und die weiteren Arbeitsorgane mit der Leistung für den hydrostatischen Fahrantrieb abgeglichen wird. In besonderen Fällen kann die elektronische Regelung über die im Bordinformationssystem enthaltenen Software ab- oder hinzu geschaltet werden. Das Bordinformationssystem besteht im einfachsten Fall aus einem LCD Monitor der über alle wichtigen Bordfunktionen informiert und diese anzeigt. Mit dem Abschalten der elektronischen Regelung besteht die Möglichkeit, ohne die Belastungen der anderen Antriebsaggregate zu berücksichtigen, das Doppelkupplungsgetriebe zu schalten.

Die Bedienung des Doppelkupplungsgetriebes erfolgt vom Arbeitsplatz in der Fahrerkabine aus. Die Fahrerkabine ist dazu mit den notwendigen Bedieninstrumenten und den übersichtlich und zentral angeordneten Anzeigen ausgestattet. Dem Fahrer stehen zwei Möglichkeiten zur Verfügung die Zuführvorrichtung über das Doppelkupplungsgetriebe zu steuern. Wahlweise das Schalten im manuellen oder im automatischen Modus vorzunehmen. Die Einstellung kann im Bordinformationssystem vorgenommen werden. Wird manuelles Schalten ausgewählt, kann das manuelle Schalten der Schaltstufen des Doppelkupplungsgetriebes durch Bedienelemente im Bedienerpult oder durch Bedienelemente im Multifunktionshebel erfolgen. Der Multifunktionshebel ist ein Fahrhebel der die wichtigsten Funktionen des Feldhäckslers zur Maschinenführung in einem Hebel vereint. Das Schalten des Doppelkupplungsgetriebes für die Schnittlängeneinstellung des Erntegutes kann somit einfach, schnell und problemlos vorgenommen werden. Die gewählte Schaltstufe mit der dazugehörigen Schnittlänge des Erntegutes wird im integrierten Bordinformationssystem angezeigt. Der Fahrer kann jederzeit die aktuell eingestellte Schnittlänge kontrollieren und das eingestellte Erntegut ablesen.

Nach Auswahl des automatischen Modus übernimmt die elektronische Steuerung mit Hilfe einer Software das Einstellen der Zuführvorrichtung bzw. das Schalten der Schaltstufen des Doppelkupplungsgetriebes. Auch im automatischen Modus kann eine Vorwahl für das zu erntende Gut, Mais oder Gras, erfolgen. Die Steuersoftware enthält für das Erntegut Mais und Gras ein Grundprogramm. Das Grundprogramm enthält feste und variable Parameter. Zu den festen Parametern gehören z.B. das eine Grundschaltstufe für Mais oder Gras, je nachdem welches Grundprogramm gewählt wurde, im Bordinformationssystem voreingestellt und angezeigt wird. Beim Starten des Feldhäckslers zum Ernteeinsatz auf einem Feldstück werden die Einzugs- und Vorpresswalzen immer erst mit der voreingestellten Schnittlänge und damit in einer vorgewählten Einzugsgeschwindigkeit betrieben. In der Regel werden im Ernteeinsatz mehrere Feldstücke mit möglicherweise unterschiedlichem Erntegut und Erntebedingungen bearbeitet. Die Steuersoftware kann daher vor dem Ernteeinsatz mit den entsprechenden Parametern programmiert werden.

Die Programmierung der Software mit den entsprechenden Daten zur automatischen Einstellung der Schnittlänge kann auch über ein GPS- System erfolgen. Anhand der GPS- Position des Feldhäckslers im Feldstück kann ein Wechsel zu einem anderen Feldstück erkannt werden. Der Wechsel zu einem anderen Feldstück kann einen möglichen Wechsel der Schnittlänge durch automatisches Schalten der Schaltstufen beim Doppelkupplungsgetriebe bzw. der Einzugsgeschwindigkeit der Einzugs- und Vorpresswalzen zur Folge haben. Weiterhin kuppelt die Elektronik das Doppelkupplungsgetriebe in den Leerlauf, z.B. wenn das Einlegen des Straßengangs für den Fahrbetrieb im Straßenverkehr oder das Verschwenken des Auswurflcrümmers aus der Arbeits- in die Transportposition erfolgt. Beim nächsten Start der Zuführvorrichtung wird in die vorgewählte Schnittlänge geschaltet. Die Voreinstellung entspricht der zuvor genannten Grundstufe. Befindet sich kein Erntegut zwischen den Einzugs- und Vorpresswalzen, kann ein verschleißarmes Kuppeln durchgeführt werden. Der Abstand der Einzugs- und Vorpresswalzen wird anhand der Auslenkung der oberen Zuführwalzen zur Ermittlung des Erntedurchsatzes gemessen. All diese Möglichkeiten bieten dem Fahrer eine ideale Anpassung des Feldhäckslers an die unterschiedlichsten Erntebedingungen und tragen zum Erreichen einer optimalen Häckselqualität und Wirtschaftlichkeit bei.

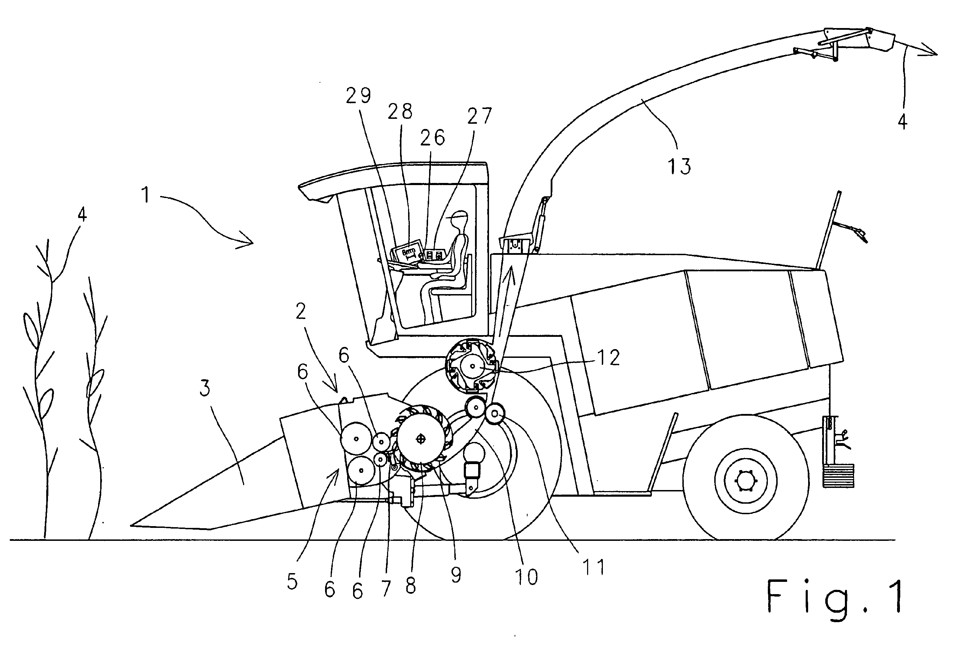

Ein Ausführungsbeispiel der Erfindung ist in den Zeichnungen rein schematisch dargestellt und wird nachfolgend näher beschrieben. Es zeigt
- Figur 1: eine schematische Darstellung einer selbstfahrenden Landmaschine,
- Figur 2: eine schematische Darstellung der Antriebscharakteristik,
- Figur 3: eine schematische Darstellung der Steuerung der Zuführvorrichtung zur manuellen und automatischen Schnittlängeneinstellung

In Figl.1 ist ein Feldhäcksler gezeigt. Feldhäcksler 1 werden zur Aufnahme des Erntegutes und zur Zerkleinerung der Futterpflanzen wie Mais und Gras, insbesondere Mais für die Rinderhaltung eingesetzt. Dazu besitzt der Feldhäcksler 1 eine Zuführvorrichtung 2, die aus einem Vorsatzgerät 3 und den Zuführwalzen, bestehend aus Einzugs- und Vorpresswalzen 6, besteht. Über ein Vorsatzgerät 3 gelangt das abgeerntete Erntegut 4 in den Einzugsbereich 5 des Feldhäckslers 1 . In dem Einzugsbereich 5 sind paarweise angeordnete sogenannte Einzugs- und Vorpresswalzen 6 angeordnet, die das Erntegut 4 von dem Vorsatzgerät 3 übernehmen, verdichten und über eine als Stahlschiene ausgeführte Gegenschneide 7 der umlaufenden Häckseltrommel 8 zuführen. Die Häckselmesser 9 zerkleinern im Bereich der Gegenschneide 7 das Erntegut 4 und fördem das gehäckselte Erntegut 4 im rückwärtigen Bereich der Häckseltrommel 8 in einen aufsteigenden Auswurfkanal 10 . In dem Auswurfkanal 10 können so genannte Nachzerkleinerungswalzen 11 angeordnet sein, deren Aufgabe es ist, die in dem Erntegutstrom enthaltenen Maiskörner zu zerkleinern. Von der Nachzerkleinerungseinrichtung 11 wird der Erntegutstrom in einen Nachbeschleuniger 12 gefördert, der dem Erntegut 4 soviel kinetische Energie verleiht, dass das Erntegut 4 über einen Auswurfkrümmer 13 aus dem Feldhäcksler 1 herausgefördert wird. In der Regel wird das austretende Erntgut 4 sofort in ein Überladefahrzeug geworfen. Der erfindungsgemäße Gegenstand ist im Einzugsbereich 5 montiert. Damit nun unter Last eine Drehzahländerung vorgenommen werden kann, ohne dass hierfür teure stufenlos verstellbare Antriebe der Einzugs- und Vorpresswalzen 6 vorzusehen sind, schlägt die Erfindung vor, die Einzugs- und Vorpresswalzen 6 mittels eines in mehreren Gängen betreibbaren Lastschaltgetriebes anzutreiben.

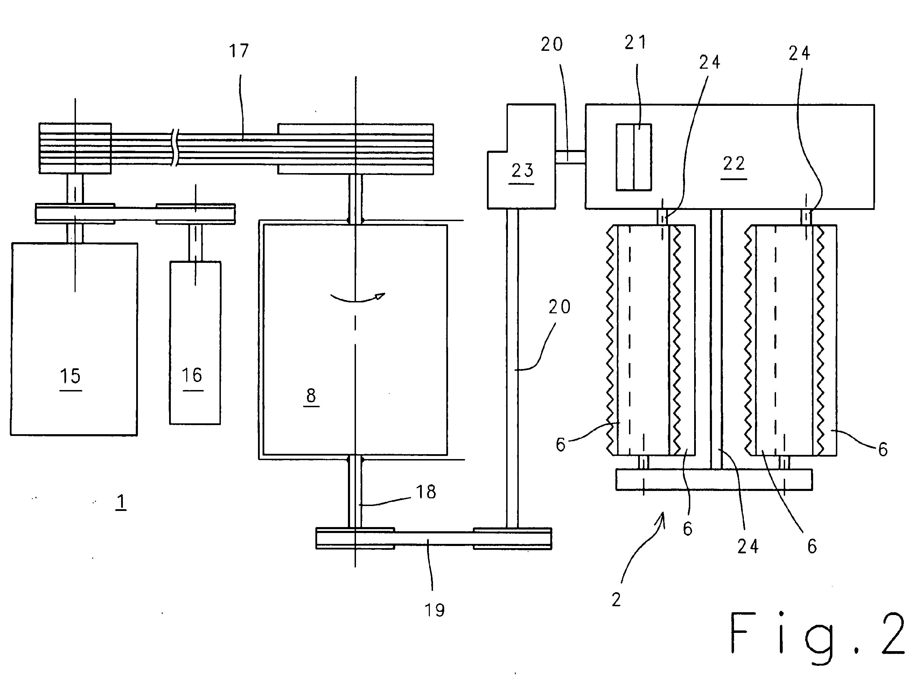

Fig.2 zeigt die Antriebscharakteristik 14 mit dem erfindungsgemäßen Gegenstand. Der Antriebsmotor 15 des Feldhäckslers 1 ist für den hydraulischen Fahrantrieb 16 und die effiziente Umsetzung der Motorleistung in Durchsatzleistung zuständig. Über ein ständig gespannten Riementrieb 17 erfolgt der direkte Antrieb vom Antriebsmotor 15 auf die Häckseltrommel 8 . Eine sichere Kraftübertragung durch gleich bleibende Riemenspannung ist gewährleistet. Der Antrieb des erfindungsgemäß als Doppelkupplungsgetriebe 22 ausgeführten Lastschaltgetriebes 22 erfolgt direkt über einen Riementrieb 19 von der Häckseltrommelwelle 18 auf die Vorgelegewelle 20 . Denkbar ist auch, das der Antrieb für das Doppelkupplungsgetriebe 22 ohne Vorgelegewelle 20 direkt von der Häckseltrommelwelle 18 aus erfolgt. Das Doppelkupplungsgetriebe 22 kann zur Erweiterung der Anzahl der Schaltstufen optional mit einem Vorschaltgetriebe 23 kombiniert werden. Das Vorschaltgetriebe 23 befindet sich im Antriebsstrang zwischen den beiden Kupplungen 21 des Doppelkupplungsgetriebe 22 und der Vorgelegewelle 20 . Des weiteren besitzt das Doppelkupplungsgetriebe 22 mehrere Abtriebswellen 24, die in dem Einzugsbereich 5 der Zuführvorrichtung 2 , die paarweise angeordneten Einzugs- und Vorpresswalzen 6 antreiben. Aufgrund der vorteilhaften Ausgestaltung des Doppelkupplungsgetriebes 22 als Vorwärts/Rückwärtsgetriebe, entfällt der bisher zusätzlich benötigte Hydraulikmotor der für die Reversierung des Schaltgetriebes bzw. der Rückwärtsdrehung der Einzugs- und Vorpresswalzen 6 zuständig war. Das Ein- und Ausschalten des Doppelkupplungsgetriebes 22 wird mittels der beiden integrierten Kupplungen 21 aus der Fahrerkabine heraus gesteuert.

Gemäß der vorliegenden Erfindung ist eine Zuführvorrichtung 2 zur selbstständigen Steuerung der Schnittlängeneinstellung vorgesehen, die den Fahrer bei der manuellen Aufgabe unterstützt, die Schnittlänge auf den Wert einzustellen, bei dem das Häckselgut eine optimale Häckselqualität aufweist oder diese Tätigkeit ganz im automatischen Betrieb übernimmt.

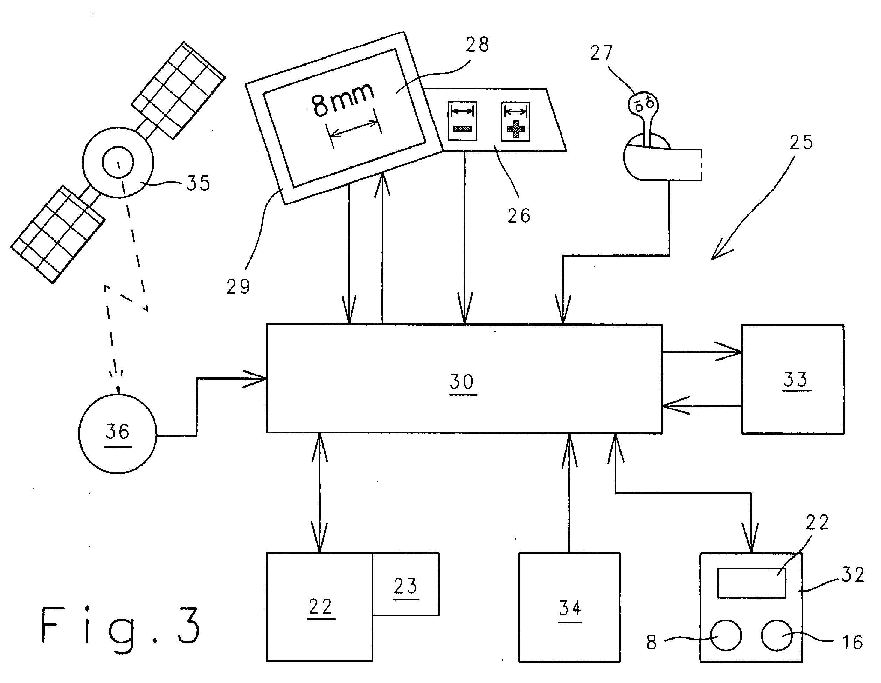

In Fig.3 ist dazu eine erfinderische Darstellung zur manuellen und automatischen Steuerung der Zuführvorrichtung 2 der Schnittlängeneinstellung aufgezeigt. Die Steuerung der Schnittlängeneinstellung 25 im manuellen Modus erfolgt über die Bedienung der Tasten am Bedienerpult 26 oder den Tasten am Fahrerhebel 27 und der mit diesen gekoppelten elektronischen Steuerung 30. Die elektronische Steuerung 30 der Schnittlängeneinstellung übernimmt über die Datenleitung 31 das Schalten des Doppelkupplungsgetriebe 22 und zeigt den eingestellten Wert im LCD Display 28 des Bordinformationssystem 29 an. Die Einstellung der Zuführvorrichtung 2 im manuellen Modus Leerlauf / Vorwärts / Rückwärts erfolgt durch den Fahrer. Zur Erleichterung der Einstellung der optimalen Schnittlänge für das Erntegut 4 und einer hohen Wirtschaftlichkeit des Feldhäckslers 1 steht dem Fahrer eine weitere elektronische Steuerung 32 zur Verfügung. Die weitere elektronische Steuerung 32 steuert die Leistung des hydrostatischen Fahrantriebes 16 in Abhängigkeit von der benötigten Leistung der Häckseltrommel 8 aufgrund der Schnittlängeneinstellung am Doppelkupplungsgetriebe 22 . Das Ein- und Ausschalten der elektronischen Steuerung 32 für die Antriebsleistung der anzutreibenden Aggregate wird mittels der Funktionen im Bordinformationssystem vorgenommen.

Anhand der Funktionstasten im Bordinformationssystem 29 erfolgt die Umstellung von manuellen auf automatischen Modus zur Einstellung der Schnittlänge am Doppelkupplungsgetriebe 22 über eine in der elektronischen Steuerung 30 enthaltenen Software 33 . Der aktuelle oder vorgewählte Wert der Schnittlängeneinstellung wird im LCD Display 28 zur Kontrolle für den Fahrer angezeigt. Weitere Parameter die zur automatischen Schnittlängeneinstellung benötigt werden sind in der Software 33 gespeichert und können durch Abfrage von Sensoren aktualisiert werden. Beispielhaft sei der Parameter der Stellung des Auswurfkrümmers 13 genannt. Befindet sich der Auswurfkrümmer 13 in der Transportstellung ist das Doppelkupplungsgetriebe 22 im Leerlauf. Wird der Auswurflcrümmer 13 ausgeschwenkt geht das Doppelkupplungsgetriebe 22 in die im Bordinformationssystem 29 vorgewählte Schaltstufe und die dieser zugeordneten Schnittlängeneinstellung.

Im automatischen Modus kann die Schnittlängeneinstellung am Doppelkupplungsgetriebe 22 auch über ein GPS- System vorgenommen werden. Über einen GPS- Sender 35 wird die Position des Feldhäckslers 1 festgestellt und dem GPS- Empfänger 36 mitgeteilt. Aus der Bewegung der Position wird ermittelt, ob der Feldhäcksler sich auf einer Straße bewegt oder sich im Feldeinsatz befindet. Auch der Fahrtwechsel zwischen Feldstücken kann festgestellt werden.

Es liegt im Rahmen des Könnens eines Fachmanns die Vorrichtung in nicht dargestellter Weise abzuwandeln oder in anderen Maschinensystemen einzusetzen, um die beschriebenen Effekte zu erzielen, ohne dabei den Rahmen der Erfindung, wie durch die Ansprüche definiert, zu verlassen.

### Bezugszeichenliste

- 1: Feldhäcksler
- 2: Zuführvorrichtung
- 3: Vorsatzgerät
- 4: Erntegut
- 5: Einzugsbereich
- 6: Vorpresswalzen
- 7: Gegenschneide
- 8: Häckseltrommel
- 9: Häckselmesser
- 10: Auswurfkanal
- 11: Nachzerkleinerungseinrichtung
- 12: Nachbeschleuniger
- 13: Auswurfkrümmer
- 14: Antriebscharakteristik
- 15: Antriebsmotor
- 16: hydrostatischer Fahrantrieb
- 17: Riementrieb
- 18: Häckseltrommelwelle
- 19: Riementrieb
- 20: Vorgelegewelle
- 21: Kupplungen
- 22: Doppelkupplungsgetriebe
- 23: Vorschaltgetriebe
- 24: Abtriebswellen
- 25: Steuerung der Schnittlängeneinstellung
- 26: Bedienpult
- 27: Fahrerhebel
- 28: LCD Display
- 29: Bordinformationssystem
- 30: elektronische Steuerung der Schnittlänge
- 31: CAN Datenbus
- 32: elektronische Steuerung der Antriebsleistung
- 33: Software
- 34: Position des Auswurfkrümmers
- 35: GPS Sender
- 36: GPS Empfänger

## Patentansprüche

1. Zuführvorrichtung einer landwirtschaftlichen Arbeitsmaschine mit wenigstens einer rotierenden antreibbaren Einzugs- und Vorpresswalze und einem mechanischen Getriebe,
**dadurch gekennzeichnet, dass**
das mechanische Getriebe als in mehreren Gängen betreibbares Lastschaltgetriebe (22) ausgebildet ist.

2. Zuführvorrichtung einer landwirtschaftlichen Arbeitsmaschine nach Anspruch 1,
**dadurch gekennzeichnet, dass**
das Lastschaltgetriebe (22) als Mehrfachkupplungsgetriebe ausgebildet ist.

3. Zuführvorrichtung einer landwirtschaftlichen Arbeitsmaschine nach Anspruch 1 bis 2,
**dadurch gekennzeichnet, dass**
das Mehrfachkupplungsgetriebe (22) als Doppelkupplungsgetriebe ausgebildet ist.

4. Zuführvorrichtung einer landwirtschaftlichen Arbeitsmaschine nach einem der vorhergehenden Ansprüche,
**dadurch gekennzeichnet, dass**
das Doppelkupplungsgetriebe (22) in sechs Gängen schaltbar ist.

5. Zuführvorrichtung einer landwirtschaftlichen Arbeitsmaschine nach einem der vorhergehenden Ansprüche,
**dadurch gekennzeichnet, dass**
das Doppelkupplungsgetriebe (22) auch zum Rückwärtsbetrieb geeignet ist.

6. Zuführvorrichtung einer landwirtschaftlichen Arbeitsmaschine nach einem der vorhergehenden Ansprüche,
**dadurch gekennzeichnet, dass**
das Doppelkupplungsgetriebe (22) über eine Vorgelegewelle (20) angetrieben wird.

7. Zuführvorrichtung einer landwirtschaftlichen Arbeitsmaschine nach einem der vorhergehenden Ansprüche,
**dadurch gekennzeichnet, dass**
die Vorgelegewelle (20) über einen Riementrieb (19) angetrieben wird.

8. Zuführvorrichtung einer landwirtschaftlichen Arbeitsmaschine nach einem der vorhergehenden Ansprüche,
**dadurch gekennzeichnet, dass**
das Doppelkupplungsgetriebe (22) zur definierten Einstellung der Schnittlänge von Erntegut dient.

9. Zuführvorrichtung einer landwirtschaftlichen Arbeitsmaschine nach einem der vorhergehenden Ansprüche,
**dadurch gekennzeichnet, dass**
das Doppelkupplungsgetriebe (22) mit einem Vorschaltgetriebe (23) kombinierbar ist.

10. Zuführvorrichtung einer landwirtschaftlichen Arbeitsmaschine nach Anspruch 9,
**dadurch gekennzeichnet, dass**
das Vorschaltgetriebe (23) zur definierten Einstellung der Schnittlänge von Erntegut dient.

11. Zuführvorrichtung einer landwirtschaftlichen Arbeitsmaschine nach einem der vorhergehenden Ansprüche,
**dadurch gekennzeichnet, dass**
das Vorschaltgetriebe (23) zur Vorwahl des Erntegutes verwendet wird.

12. Zuführvorrichtung einer landwirtschaftlichen Arbeitsmaschine nach einem der vorhergehenden Ansprüche,
**dadurch gekennzeichnet, dass**
das Doppelkupplungsgetriebe (22) mit einer elektronischen Regelung (30) ausgestattet ist und wobei die elektronische Regelung (30) die Schnittlängeneinstellung (25) am Doppelkupplungsgetriebe (22) erfasst, einem Wert zuordnet, diesen mit dem Wert der Fahrleistung vergleicht und daraus abgeleitet die Fahrgeschwindigkeit des Feldhäckslers (1) einstellt.

13. Zuführvorrichtung einer landwirtschaftlichen Arbeitsmaschine nach einem der vorhergehenden Ansprüche,
**dadurch gekennzeichnet, dass**
das Doppelkupplungsgetriebe (22) von der Fahrerkabine aus geschaltet wird.

14. Zuführvorrichtung einer landwirtschaftlichen Arbeitsmaschine nach Anspruch 13,
**dadurch gekennzeichnet,**
**dass** das Schalten des Doppelkupplungsgetriebes (22) wahlweise im manuellen oder automatischen Modus erfolgt.

15. Zuführvorrichtung einer landwirtschaftlichen Arbeitsmaschine nach einem der vorhergehenden Ansprüche,
**dadurch gekennzeichnet, dass**
das manuelle Schalten mittels eines Multifunktionshebels (27) oder mittels Bedienpult (26) erfolgt.

16. Zuführvorrichtung einer landwirtschaftlichen Arbeitsmaschine nach einem der vorhergehenden Ansprüche,
**dadurch gekennzeichnet, dass**
die gewählte Schaltstufe mit der zugehörigen Schnittlänge des Erntegutes im integrierten Bordinformationssystem (29) angezeigt wird.

17. Zuführvorrichtung einer landwirtschaftlichen Arbeitsmaschine nach einem der vorhergehenden Ansprüche,
**dadurch gekennzeichnet, dass**
eine Grundschaltstufe für die Schnittlänge verschiedener Erntegutarten im Bordinformationssystem (29) vor eingestellt ist.

18. Zuführvorrichtung einer landwirtschaftlichen Arbeitsmaschine nach einem der vorhergehenden Ansprüche,
**dadurch gekennzeichnet, dass**
das Schalten der Schaltstufen automatisch über das GPS System erfolgt.

## Claims

1. A feed apparatus of an agricultural working machine comprising at least one rotating drivable intake and pre-pressing roller and a mechanical transmission,
**characterised in that**
the mechanical transmission is in the form of a power shift transmission (22) operable in a plurality of gears.

2. A feed apparatus of an agricultural working machine according to claim 1 **characterised in that** the power shift transmission (22) is in the form of a multi-clutch transmission.

3. A feed apparatus of an agricultural working machine according to claim 1 and claim 2 **characterised in that** the multi-clutch transmission (22) is in the form of a double-clutch transmission.

4. A feed apparatus of an agricultural working machine according to one of the preceding claims **characterised in that** the double-clutch transmission (22) is shiftable into six gears.

5. A feed apparatus of an agricultural working machine according to one of the preceding claims **characterised in that** the double-clutch transmission (22) is also suitable for reverse operation.

6. A feed apparatus of an agricultural working machine according to one of the preceding claims **characterised in that** the double-clutch transmission (22) is driven by way of a countershaft (20).

7. A feed apparatus of an agricultural working machine according to one of the preceding claims **characterised in that** the countershaft (20) is driven by a belt drive (19).

8. A feed apparatus of an agricultural working machine according to one of the preceding claims **characterised in that** the double-clutch transmission (22) serves for definedly setting the cutting length of crop material.

9. A feed apparatus of an agricultural working machine according to one of the preceding claims **characterised in that** the double-clutch transmission (22) can be combined with an upstream splitter transmission (23).

10. A feed apparatus of an agricultural working machine according to claim 9 **characterised in that** the upstream splitter transmission (23) serves for definedly setting the cutting length of crop material.

11. A feed apparatus of an agricultural working machine according to one of the preceding claims **characterised in that** the upstream splitter transmission (23) is used for preselection of the crop material.

12. A feed apparatus of an agricultural working machine according to one of the preceding claims **characterised in that** the double-clutch transmission (22) is equipped with an electronic regulation (30) and wherein the electronic regulation (30) detects the cutting length setting (25) at the double-clutch transmission (22), associates it with a value, compares it to the value of the travel power output and derived therefrom adjusts the travel speed of the forage harvester (1).

13. A feed apparatus of an agricultural working machine according to one of the preceding claims **characterised in that** the double-clutch transmission (22) is shifted from the driving cab.

14. A feed apparatus of an agricultural working machine according to claim 13 **characterised in that** shifting of the double-clutch transmission (22) is effected selectively in a manual or an automatic mode.

15. A feed apparatus of an agricultural working machine according to one of the preceding claims **characterised in that** manual shifting is effected by means of a multifunction lever (27) or by means of an operating desk (26).

16. A feed apparatus of an agricultural working machine according to one of the preceding claims **characterised in that** the selected shift stage with the associated crop material cutting length is displayed in the integrated on-board information system (29).

17. A feed apparatus of an agricultural working machine according to one of the preceding claims **characterised in that** a basic shift stage for the cutting length of different kinds of crop material is preset in the on-board information system (29).

18. A feed apparatus of an agricultural working machine according to one of the preceding claims **characterised in that** shifting of the shift stages is effected automatically by way of the GPS system.

## Revendications

1. Dispositif d'amenée pour une machine de travail agricole comportant au moins un tambour d'alimentation et un rouleau de pré-compression rotatifs entraînés ainsi qu'un réducteur mécanique, **caractérisé en ce que** le réducteur mécanique est agencé en boîte de vitesses automatique (22) à plusieurs rapports.

2. Dispositif d'amenée pour une machine de travail agricole selon la revendication 1, **caractérisé en ce que** la boîte de vitesses automatique (22) est conformée en boîte de vitesses à embrayages multiples.

3. Dispositif d'amenée pour une machine de travail agricole selon les revendications 1 à 2, **caractérisé en ce que** la boîte de vitesses à embrayages multiples (22) est conformée en boîte de vitesses à double embrayage.

4. Dispositif d'amenée pour une machine de travail agricole selon une des revendications précédentes, **caractérisé en ce que** la boîte de vitesses à double embrayage (22) peut commuter entre six rapports.

5. Dispositif d'amenée pour une machine de travail agricole selon une des revendications précédentes, **caractérisé en ce que** la boîte de vitesses à double embrayage (22) permet le fonctionnement inverse.

6. Dispositif d'amenée pour une machine de travail agricole selon une des revendications précédentes, **caractérisé en ce que** la boîte de vitesses à double embrayage (22) est entraînée par un arbre de transmission intermédiaire (20).

7. Dispositif d'amenée pour une machine de travail agricole selon une des revendications précédentes, **caractérisé en ce que** l'arbre de transmission intermédiaire (20) est entraîné par un système de courroies (19).

8. Dispositif d'amenée pour une machine de travail agricole selon une des revendications précédentes, **caractérisé en ce que** la boîte de vitesses à double embrayage (22) permet le réglage de la longueur de coupe du produit récolté.

9. Dispositif d'amenée pour une machine de travail agricole selon une des revendications précédentes, **caractérisé en ce que** la boîte de vitesses à double embrayage (22) peut être combinée à une boîte intermédiaire (23).

10. Dispositif d'amenée pour une machine de travail agricole selon la revendication 9, **caractérisé en ce que** la boîte intermédiaire (23) sert au réglage de la longueur de coupe du produit récolté.

11. Dispositif d'amenée pour une machine de travail agricole selon une des revendications précédentes, **caractérisé en ce que** la boîte intermédiaire (23) sert à la présélection du produit récolté.

12. Dispositif d'amenée pour une machine de travail agricole selon une des revendications précédentes, **caractérisé en ce que** la boîte de vitesses à double embrayage (22) est équipée d'une régulation électronique (30), la régulation électronique (30) déterminant le réglage de longueur de coupe (25) au niveau de la boîte de vitesses à double embrayage (22), associant une valeur à celle-ci, comparant ladite valeur à la valeur à la prestation de la machine et réglant la vitesse de progression de l'ensileuse (1) en fonction de cela.

13. Dispositif d'amenée pour une machine de travail agricole selon une des revendications précédentes, **caractérisé en ce que** la boîte de vitesses à double embrayage (22) est commandée depuis le poste de conduite.

14. Dispositif d'amenée pour une machine de travail agricole selon la revendication 13, **caractérisé en ce que** la commande de la boîte de vitesses à double embrayage (22) a lieu au choix en mode manuel ou en mode automatique.

15. Dispositif d'amenée pour une machine de travail agricole selon une des revendications précédentes, **caractérisé en ce que** la commande en mode manuel est effectuée à l'aide d'un levier multifonctions (27) ou à l'aide d'un pupitre de commande (26).

16. Dispositif d'amenée pour une machine de travail agricole selon une des revendications précédentes, **caractérisé en ce que** le rapport sélectionné et la longueur de coupe du produit récolté sont affichés dans le système d'information de bord (29) intégré.

17. Dispositif d'amenée pour une machine de travail agricole selon une des revendications précédentes, **caractérisé en ce qu'**un rapport de boîte de base pour la longueur de coupe de différents types de produit récolté est préréglé dans le système d'information de bord (29) intégré.

18. Dispositif d'amenée pour une machine de travail agricole selon une des revendications précédentes, **caractérisé en ce que** la sélection des rapports de boîte est réalisée de manière automatique par l'intermédiaire du système GPS.
